# EUROPÄISCHE PATENTSCHRIFT

(11) **EP 1 331 978 B1**
(45) Veröffentlichungstag und Bekanntmachung des Hinweises auf die Patenterteilung: **04.11.2009**
(21) Anmeldenummer: 01988613.4
(22) Anmeldetag: 22.09.2001
(51) Int. Cl.: B01D 29/11, B01D 29/21, B01D 35/147

(54) **FLÜSSIGKEITSFILTER MIT EINEM IM STÜTZROHR DES FILTEREINSATZES ANGEORDNETEN VENTIL**
LIQUID FILTER COMPRISING A VALVE ARRANGED IN THE SUPPORTING TUBE OF A FILTER ELEMENT
FILTRE A LIQUIDE COMPORTANT UN OBTURATEUR PLACE DANS LE TUBE DE SUPPORT DE L'ELEMENT FILTRANT

(30) Priorität: 20.10.2000 DE 10052101
(43) Veröffentlichungstag der Anmeldung: 06.08.2003
(73) Patentinhaber: Mann + Hummel GmbH, 71638 Ludwigsburg (DE)
(72) Erfinder: JAINEK, Herbert, 74074 Heilbronn (DE)
(74) Vertreter: Voth, Gerhard
(86) Internationale Anmeldenummer: PCT/EP2001/010964
(87) Internationale Veröffentlichungsnummer: WO 2002/034354

(56) Entgegenhaltungen:
- WO-A-00/09238
- US-A- 2 877 902
- US-A- 5 535 588

## Beschreibung

### Stand der Technik

Die Erfindung betrifft einen Flüssigkeitsfilter, insbesondere für Öl oder Kraftstoff einer Brennkraftmaschine, der in bekannter Weise aufgebaut ist und im Stützrohr des Filtereinsatzes ein Ventil beinhaltet, nach der Gattung des Patentanspruchs 1. Außerdem betrifft die Erfindung einen Montagekörper, der zur Befestigung des Ventils im Stützrohr geeignet ist, nach der Gattung des Patentanspruchs 10. Zuletzt betrifft die Erfindung ein Montageverfahren für den beschriebenen Flüssigkeitsfilter nach Anspruch 8.

Flüssigkeitsfilter der Eingangs beschriebenen Art sind bekannt. So ist zum Beispiel in der WO 00/09238 gemäß Figur 1 ein Flüssigkeitsfilter gezeigt, dessen Filtereinsatz mit einem Stützrohr versehen ist. In das Stützrohr ist eine Ventileinheit, bestehend aus einer Ventilfeder, die sich im Stützrohr abstützt und einem von der Feder gehalten Ventilteller angeordnet. Diese Bauteile sind mit Hilfe eines Montagekörpers aus Kunststoff im Stützrohr gehalten. Auf diese Weise soll ein einfach und kostengünstig zu montierendes Ventil geschaffen werden.

Das Stützrohr ist bevorzugt ebenfalls aus Kunststoff gefertigt. Bei einer Befestigung des Montagekörpers können daher nur begrenzt Haltekräfte übertragen werden. Zusätzlich muß eine Schnappverbindung vorgesehen werden, die ein Lösen des Montagekörpers verhindert. Zu einer vollständigen Abdichtung zwischen Roh- und Reinseite des Filters muß außerdem eine Dichtung zwischen Montagekörper und Stützrohr vorgesehen werden. Hierbei fällt ein zusätzliches Bauteil an, welches den Montageprozeß verkompliziert und die Wirtschaftlichkeit der vorgeschlagenen Lösung verringert.

Aufgabe der Erfindung ist es daher, einen Flüssigkeitsfilter mit einem besonders kostengünstig herzustellenden und zu montierenden Ventil im Stützrohr zu schaffen. Diese Aufgabe wird durch die Merkmale des Patentanspruches 1 gelöst.

### Vorteile der Erfindung

Erfindungsgemäß ist der Montagekörper zur Fixierung des Ventils im Stützrohr aus einer Platte gefertigt, welche insbesondere aus Federstahl ist. Diese Platte weist eine größere Härte auf, als das Stützrohr und besitzt außerdem einen größeren Durchmesser als eine Einbauöffnung, die im Stützrohr für die Halterung der Platte vorgesehen ist. Nach Einbau der Platte im Stützrohr ergibt sich daher unter Überwindung des Unterschiedes beider Durchmesser eine Anpreßkraft die einerseits zu einer sicheren Fixierung der Platte im Stützrohr führt und andererseits eine zuverlässige Dichtung zwischen Roh- und Reinseite des Filters gewährleistet. Damit können in ein einziges Bauteil mehrere Funktionen integriert werden, was gemäß der Aufgabe der Erfindung zu einer Verbesserung der Wirtschaftlichkeit des Flüssigkeitsfilters führt.

Eine alternative Ausgestaltung des Ventils sieht vor, dass dieses eine Baueinheit, bestehend zumindest aus dem Montagekörper und den Ventilbauteilen bildet. Diese Baueinheit lässt sich als Ganzes in die Einbauöffnung des Einbauortes hineinschieben, wodurch diese Funktionseinheit bei unterschiedlichen Anwendungsfällen zum Einsatz kommen kann. Wichtig ist lediglich, dass die Materialeigenschaften des Einbauortes für eine zuverlässige Fixierung der Ventileinheit durch den Montagekörper gewährleistet ist. Dies wird dadurch erreicht, dass wie beschrieben der Einbauort eine geringere Härte aufweisen muss, als der Montagekörper. Bei Einbauorten, die zum Beispiel durch Kunststoffgehäuse gebildet werden, ist diese Bedingung gegeben.

Das Ventil ist insbesondere als Umgehungsventil ausgeführt. Im Falle eines unzulässig hohen Ansteigens des Druckunterschiedes am Filterelement, also zwischen Roh- und Reinseite, öffnet das Umgehungsventil, um den Flüssigkeitskreislauf, in den der Filter eingebaut ist, nicht zu unterbrechen. Solche Umgehungsventile sind beispielsweise im Ölkreislauf einer Brennkraftmaschine notwendig, da diese unabhängig von der Funktion des Filters immer mit Schmieröl versorgt werden muß.

Gemäß einer besonders vorteilhaften Ausgestaltung der Erfindung ist in die Platte gleichzeitig der Ventilsitz integriert, der mit dem Ventilteller kommuniziert. Dadurch läßt sich eine weitere Funktionsintegration erreichen, wodurch die Anzahl der Bauteile sowie deren Komplexität verringert werden können. Besonders vorteilhaft ist es dabei, die Platte zumindest teilweise mit einem Elastomer zu beschichten. Das Elastomer kann sowohl die Dichtung zwischen der Platte und der Einbauöffnung, also zwischen Roh- und Reinseite, als auch die Dichtung zwischen Ventilteller und Ventilsitz verbessern. Die Beschichtung kann insbesondere einseitig oder beidseitig erfolgen.

Das weitere Element des Ventils, nämlich der Ventilteller, stützt sich unter Zwischenschaltung einer Druckfeder in vorteilhafter Weise unmittelbar an einer Anlagefläche des Stützrohres ab. Alternativ zu der unmittelbaren Abstützung besteht auch die Möglichkeit, einen Ventiltellerträger vorzusehen, welcher in das Stützrohr einrastet und dort für die Aufnahme der Druckfeder sorgt.

In einer weiteren Ausgestaltung der Erfindung ist vorgesehen, am Stützrohr einen Anschlag für den Montagekörper anzuordnen. Der Anschlag kann aus Stegen oder aus einem Flansch bestehen und erleichtert die manuelle oder automatisierte Montage des Montagekörpers.

Zur Verbesserung der Fixierung der Platte am Einbauort kann in der Einbauöffnung zusätzlich ein Absatz vorgesehen werden. Dieser korrespondiert mit der Platte in der Art, dass eine axiale Fixierung der Platte zumindest in einer Richtung erfolgt. Diese Richtung ist vorteilhafter Weise die Ausbaurichtung der Platte, welche dadurch unmöglich gemacht wird. Dabei ist der Absatz so gestaltet, dass dieser einen verengten Durchmesser im Vergleich zum Außendurchmesser der Platte im eingebauten Zustand aufweist. Hierdurch entsteht die technische Wirkung des Absatzes.

Gemäß einer besonderen Ausgestaltung der Erfindung kann die Platte als Tiefziehteil aus Blech gefertigt werden. Ein solches Bauteil läßt sich aus gestanzten Rohlingen besonders einfach fertigen. Dabei kann eine Beschichtung mit einem Elastomer vor dem Stanzen oder vor dem Tiefziehen erfolgen, wobei der Beschichtungsprozeß bei ebenen Bauteilen vereinfacht wird. Hierdurch lassen sich weitere Fertigungskosten einsparen.

Ein Verfahren zur Montage der Platte in dem Flüssigkeitsfilter beinhaltet ein Einführen der Platte in die vorgesehene Einbauöffnung im Stützrohr. Dadurch werden die Funktionsbauteile des Ventils die zum Beispiel aus der Ventilfeder und dem Ventilteller bestehen, fixiert. Die Fixierung der Platte in der Einbauöffnung kommt durch eine Deformation beider Bauteile zustande. Hierbei können plastische und elastische Deformationsanteile genutzt werden. Die Deformationsanteile sind auf den bereits beschriebenen Durchmesserunterschied zwischen Platte und Einbauöffnung zurückzuführen. Da die Platte das härtere Bauteil ist, gibt sie in der Einbauöffnung weniger oder gar nicht nach, wodurch sie sich im weicheren Material des Stützrohres verkrallt.

Dieser Verkrallungsprozeß ist durch den bereits beschriebenen Absatz in der Einbauöffnung zu verstärken, wodurch eine besonders zuverlässig Verbindung entsteht.

Der bereits beschriebene Durchmesserunterschied zwischen Platte und Einbauöffnung bezieht sich auf die Platte im eingebauten Zustand. Gemäß einer Weiterbildung des Verfahrens zur Montage der Platte ist es nämlich vorgesehen, dass die Platte bei Einbau in die Einbauöffnung durch ein geeignetes Werkzeug zusätzlich plastisch verformt wird, so dass sich der Durchmesser dieser Platte erweitert. Dadurch kann die Festigkeit der Verbindung zwischen Platte und Stützrohr verstärkt oder sogar erst hergestellt werden. Im letzteren Fall kann die Platte mit einem Durchmesser versehen werden, welcher kleiner oder gleich dem der Einbauöffnung ist. Sie läßt sich dadurch besonders einfach in die Einbauöffnung einführen, wobei eine feste Verbindung erst durch Aufweiten des Durchmessers der Platte erzeugt wird.

Ein Montagekörper, der zur Montage in einem Flüssigkeitsfilter der beschriebenen Art vorgesehen ist, ist ebenfalls unter Schutz gestellt. Der Montagekörper kann insbesondere aus einem ausgestanzten Blechrohling gefertigt werden. Hierbei ist es besonders vorteilhaft, wenn der dadurch entstehende Stanzgrat bei dem verformten, fertigen Montagekörper radial derart nach außen weist, dass bei einer Montage im Einbauort die Verkrallung durch den Grat unterstützt wird. Hierdurch ergibt sich eine besonders zuverlässige Fixierung des Montagekörpers. Um dies zu gewährleisten kann der Grat insbesondere vom Rand des Montagekörpers radial nach außen weisen, so dass dieser sich in das weichere Material des Einbauortes gräbt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: einen Flüssigkeitsfilter mit einem erfindungsgemäßen Umgehungsventil im Mittelschnitt,
- Figur 2: eine alternative Ausgestaltung der Verbindung zwischen Montagekörper und Stützrohr, wobei ein Ausschnitt entsprechend dem Detail x aus Figur 1 dargestellt ist und
- Figur 3: eine Ventileinheit mit integriertem Montagekörper im Mittelschnitt.

### Beschreibung der Ausführungsbeispiele

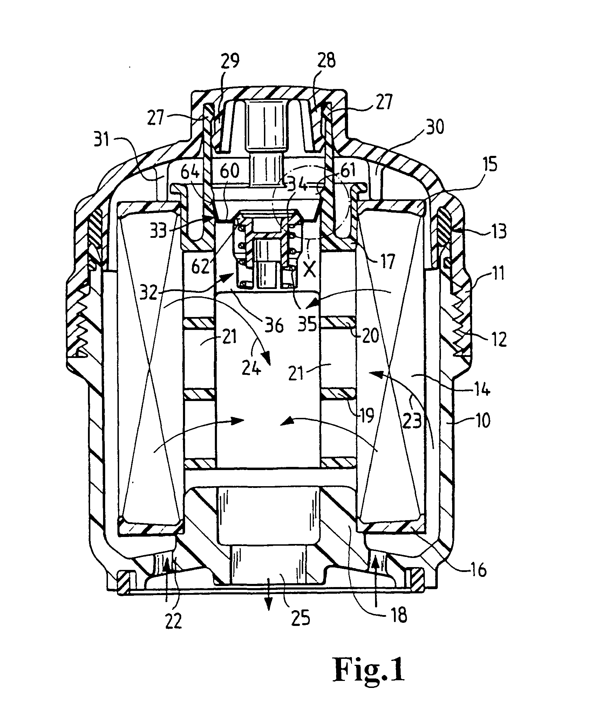

Der Flüssigkeitsfilter gemäß Figur 1 besteht aus einem Gehäuse 10, welches mit einem Deckel 11 verschlossen ist. Der Deckel ist über eine Schraubverbindung 12 an dem Gehäuse befestigt. Zur Abdichtung zwischen Deckel 11 und Gehäuse 10 ist ein Dichtungssystem 13 vorgesehen. In dem Gehäuse 10 befindet sich ein Filtereinsatz 14. Dieser besteht aus einem zickzackförmig gefalteten Filterpapier, das zu einem Kreisring geformt ist und an den Stirnseiten Endscheiben 15, 16 aufweist. Die Endscheiben liegen abdichtend an dem Stützrohr 17 bzw. dem Dichtflansch 18 an. Das Stützrohr 17 weist Stützstege 19, 20 für den Filtereinsatz 14 auf. Außerdem sind Durchbrüche 21 über den Umfang des Stützrohres verteilt angeordnet, die ein Abfließen der gefilterten Flüssigkeit ermöglichen. Die ungefilterte Flüssigkeit tritt durch den Flüssigkeitszulauf 22, durchströmt gemäß Pfeil 23, 24 den Filtereinsatz 14 und verläßt - wie erwähnt - durch die Durchbrüche 21 des Stützrohres 17 und den Flüssigkeitsrücklaufkanal 25 das Flüssigkeitsfilter.

Das Stützrohr 17 weist im oberen Bereich Rastzungen 26, 27 auf. Diese wirken mit Rastzungen 28, 29 des Deckels zusammen und schaffen eine nahezu unlösbare Verbindung zwischen Deckel und Stützrohr 17. Selbstverständlich kann unter Aufbringung entsprechender Zugkräfte das Stützrohr 17 vom Deckel 11 gelöst werden. Bei dem normalen Austausch des Filtereinsatzes 14, bei welchem der Filtereinsatz 14 von dem Stützrohr abgezogen wird, verbleibt das Stützrohr zuverlässig am Deckel 11. Am Deckel 11 sind Anschlagstege 30, 31 für den Filtereinsatz vorgesehen, die damit die axiale Lage des Filtereinsatzes definieren.

Im Stützrohr 17 ist ein Umgehungsventil 32 angeordnet. Dieses Ventil hat die Aufgabe, bei zu stark verschmutztem Filtereinsatz einen Flüssigkeitskreislauf aufrechtzuerhalten. Das Umgehungsventil 32 besteht aus einem Montagekörper 33, einem Ventilteller 34, einer Druckfeder 35 sowie einem Ventiltellerträger 36, der als Teil des Stützrohres ausgeführt ist. Der Ventiltellerträger 36 ist Teil des Stützrohres 17. Der Montagekörper 33 weist eine Außenkante 64 auf und ist über einen Preßsitz in das Stützrohr 17 eingeschoben.

Die gezeigte Befestigung des Montagekörpers stellt eine zuverlässige Abdichtung dar. Die Befestigung muß lediglich gewährleisten, daß die Partikel, welche von dem Filtereinsatz 14 zurückgehalten werden, auch in diesem Bereich zurückgehalten werden, d. h. die Undichtheit dieser Befestigung muß der Filterfeinheit des Filtereinsatzes 14 entsprechen. Die Dichtung wird durch den Preßsitz der Außenkante 64 in einer Einbauöffnung 61 erzeugt, wobei der Preßsitz eine elastische Deformation sowohl der den Montagekörper 33 bildenden Platte 60 als auch der Einbauöffnung 61 im Stützrohr 17.

Weiterhin ist in den Montagekörper 33 ein Ventilsitz 62 integriert, an dem sich der Ventilteller 34 abstützt. Durch diese beiden Bauteile ist somit die Funktion des Umgehungsventils gegeben. Der Ventilteller wird mit Hilfe der Druckfeder 35 gegen den Ventilsitz 62 gepreßt.

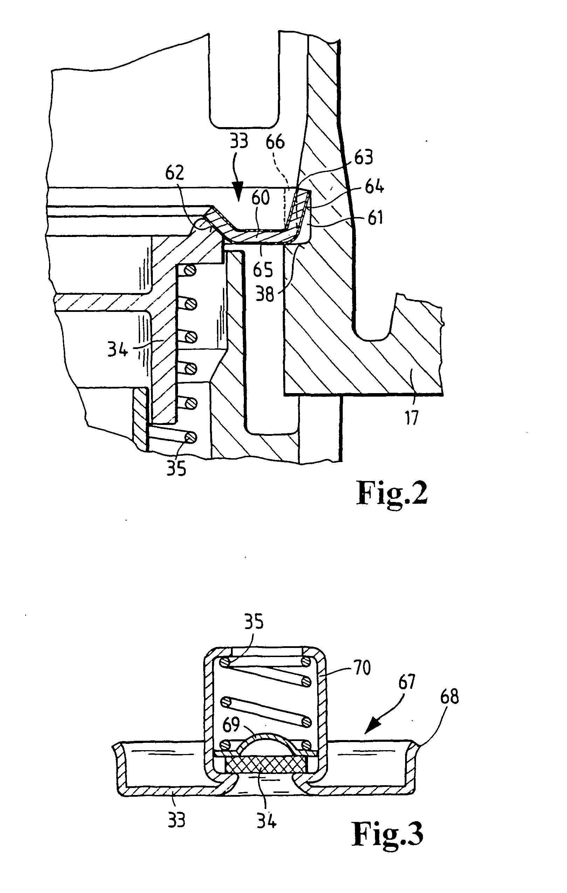

In Figur 2 ist eine Alternative Ausgestaltung des Montagekörpers 33 in der Einbauöffnung 61 dargestellt. Ansonsten entspricht der in Figur 2 dargestellte Ausschnitt des Flüssigkeitsfilter der Variante gemäß Figur 1, wobei gleichartige Bauteile mit denselben Bezugszeichen versehen sind.

Die Platte 60 des Montagekörpers 33 ist vollständig mit einem Elastomer 65 beschichtet, welches nach dem Tiefziehen der Platte aufgebracht wurde. Alternativ ist auch eine einseitige Beschichtung denkbar. Dieses Elastomer führt zu einer verbesserten Dichtungswirkung des Ventilsitzes 62 sowie in der Einbauöffnung 61. Bei der dargestellten Ausgestaltung der Platte 60 fällt auf, dass der Ventilsitz 62 und die Abdichtung in der Einbauöffnung 61 sich auf derselben Seite der Platte befinden. Daher ist eine alternative Herstellung des Montagekörpers auch denkbar in der Art, dass das plattenförmige Halbzeug aus Stahl einseitig mit einem Elastomer beschichtet wird. Bei der anschließenden Verformung der gestanzten Rohlinge gibt das Elastomer aufgrund seiner Materialeigenschaften nach, so dass ein einseitig beschichteter Montagekörper zustande kommt.

Die Einbauöffnung 61 ist mit einem Absatz 63 versehen, mit dessen Hilfe ein Herausrutschen des Montagekörpers, verhindert wird.

Um die Montage des Montagekörpers 33 zu erleichtern, kann dieser zunächst in der gestrichelt dargestellten Kontur 66 hergestellt werden. Dieser ist zur Montage problemlos an dem Absatz 63 vorbei in die Einbauposition zu bringen. Anschließend wird durch ein entsprechendes Werkzeug der Außendurchmesser des Montagekörpers aufgeweitet, so dass die Außenkante 64 hinter dem Absatz 63 zum Anliegen kommt. Auf diese Weise wird zum einen die Fixierung des Montagekörpers im Stützrohr 17 gewährleistet, zum anderen entsteht durch das Elastomer 65 an der Außenkante 64 eine zuverlässige Abdichtung zwischen Roh- und Reinseite des nicht dargestellten Filterelementes.

An dem Stützrohr 17 sind Anschläge 38 vorgesehen. Diese begrenzen bzw. fixieren die axiale Lage des Montagekörpers 33 und erleichtern den Einbau desselben in das Stützrohr 17. Der Montagekörper 33 kann mit Schnappelementen 42, 48 versehen sein zur Verrastung an dem Stützrohr 17.

Gemäß Figur 3 ist eine Version dargestellt, bei der der Montagekörper 33 zum Sammeln mit den restlichen Ventilbauteilen einer Ventileinheit 67 ergibt. In den Montagekörper ist eine Ventilaufnahme 70 integriert, welche den Ventilteller 34 aufnimmt, der mit einer Führungsplatte 69 versehen ist. An der Führungsplatte greift die Druckfeder 35 an, die für den Dichtdruck des Ventils sorgt.

Mit Hilfe von Stanzgraten 68 lässt sich die Ventileinheit 67 nach dem selben Prinzip in ein Gehäuse einsetzen, wie dies in Figur 1 dargestellt ist. Das Stützrohr kann in diesem Zusammenhang als Gehäusebauteil aufgefasst werden. Genauso gut ist jedoch auch eine direkte Anbindung an das Gehäuse denkbar. Eine zusätzliche Abdichtung durch eine Elastomerbeschichtung ist bei diesem Ausführungsbeispiel nicht vorgesehen. Der Stanzgrat 68 gräbt sich so tief im Einbauort ein, dass dieser zu einer zuverlässigen Dichtung ausreicht.

Der Ventilteller kann aus einem Elastomer gefertigt sein, so dass auch die Abdichtung des Ventils nicht durch eine zusätzliche Elastomerbeschichtung des Montagekörpers 33 gegeben werden muss.

## Patentansprüche

1. Flüssigkeitsfilter, insbesondere für Öl oder Kraftstoff einer Brennkraftmaschine, bestehend aus einem Gehäuse (10) mit mindestens einem Flüssigkeitszulauf (22), einem Rücklaufkanal (25) und einem Filtereinsatz (14), wobei in einem Einbauort des Gehäuses einer Ventileinheit (67), bestehend zumindest aus einem Montagekörper (33) zur Montage der Ventileinheit im Gehäuse, einem Ventilsitz (62) und einem Ventilteller (34), angebracht ist, **dadurch gekennzeichnet, dass** der Montagekörper aus einer Platte (60), insbesondere aus Stahl, besteht, welche eine größere Härte aufweist, als der Werkstoff des Einbauortes im Gehäuse, und einen größeren Durchmesser besitzt, als eine durch den Einbauort definierte Einbauöffnung (61).

2. Flüssigkeitsfilter, insbesondere für Öl oder Kraftstoff einer Brennkraftmaschine, bestehend aus einem Gehäuse (10) mit mindestens einem Flüssigkeitszulauf (22), einem Rücklaufkanal (25) und einem Filtereinsatz (14) und einem Stützrohr für den Filtereinsatz sowie einem im Stützrohr (17), welches insbesondere aus Kunststoff gefertigt ist, angeordneten Ventil, insbesondere einem Umgehungsventil, wobei das Ventil einen Montagekörper (33) zur Fixierung des Ventils im Stützrohr (17) aufweist, **dadurch gekennzeichnet, dass** der Montagekörper aus einer Platte (60), insbesondere aus Stahl, besteht, welche eine größere Härte aufweist, als das Stützrohr, und einen größeren Durchmesser besitzt, als eine im Stützrohr (17) für die Platte vorgesehene Einbauöffnung (61).

3. Flüssigkeitsfilter nach einem der vorigen Ansprüche, **dadurch gekennzeichnet, dass** in der Platte (60) ein Ventilsitz (62) integriert ist, der im geschlossenen Zustand des Ventils durch einen Ventilteller (34) abgedichtet ist.

4. Flüssigkeitsfilter nach einem der Ansprüche 2 oder 3, **dadurch gekennzeichnet, dass** die Platte (60) zumindest teilweise mit einem Elastomer beschichtet ist

5. Flüssigkeitsfilter nach einem der Ansprüche 2 - 4, **dadurch gekennzeichnet, dass** der Ventilteller (34) des Ventils. (32) sich unter Zwischenschaltung einer Druckfeder (35) in dem Stützrohr (17) abstützt.

6. Flüssigkeitsfilter nach einem der Ansprüche 2 - 5 , **dadurch gekennzeichnet, dass** das Stützrohr (17) einen Anschlag für den Montagekörper (33) in Form eines ringförmigen Flansches oder in Form von Stegen (38) aufweist.

7. Flüssigkeitsfilter nach einem der vorherigen Ansprüche, **dadurch gekennzeichnet, dass** die Platte (60) ein Tiefziehteil aus Blech ist.

8. Verfahren zur Montage einer Platte (60) in einem Flüssigkeitsfilter, insbesondere für Öl oder Kraftstoff einer Brennkraftmaschine, bestehend aus einem Gehäuse (10) mit mindestens einem Flüssigkeitszulauf (22), einem Rücklaufkanal (25) und einem Filtereinsatz (14) und einem Stützrohr für den Filtereinsatz sowie einem im Stützrohr (17), welches insbesondere aus Kunststoff gefertigt ist, angeordneten Ventil, insbesondere einem Umgehungsventil, wobei das Ventil einen Montagekörper (33) zur Fixierung des Ventils im Stützrohr (17) aufweist, **dadurch gekennzeichnet, dass** der Montagekörper aus einer Platte (60), insbesondere aus Stahl, besteht, welche eine größere Härte aufweist, als das Stützrohr, und einen größeren Durchmesser besitzt, als eine im Stützrohr (17) für die Platte vorgesehene Einbauöffnung (61), und dass die Platte (60) in die hierfür vorgesehene Einbauöffnung (61) im Stützrohr eingeschoben wird, wodurch ein Ventilteller (34) und eine Druckfeder (35) als Funktionsbauteile des Ventils im Stützrohr fixiert werden, wobei eine Fixierung der Platte durch eine Deformation der Platte (60) und der Einbauöffnung (61) zustande kommt.

9. Verfahren nach Anspruch 8, **dadurch gekennzeichnet, dass** die Platte (60) nach dem Einsetzen in die Einbauöffnung (61) durch ein geeignetes Werkzeug derart plastisch verformt wird, dass sich der Durchmesser der Platte erweitert.

## Claims

1. Liquid filter, in particular for oil or fuel of an internal combustion engine, consisting of a housing (10) with at least one fluid inlet (22), one return duct (25) and one filter insert (14), a valve unit (67) that consists of at least one assembly body (33) for assembling the valve unit in the housing, a valve seat (62) and a valve disk (34) being attached in an installation site of the housing, **characterized in that** the assembly body consists of a plate (60), in particular of steel which has a stronger hardness than the material of the installation site in the housing, and features a larger diameter than an installation opening (61) defined by the installation site.

2. Liquid filter, in particular for oil or fuel of an internal combustion engine, consisting of a housing (10) with at least one fluid inlet (22), one return duct (25) and one filter insert (14), and a support tube for the filter insert as well as a valve disposed in the support tube (17) which is in particular made of plastic, in particular a bypass valve, the valve featuring an assembly body (33) for fixing the valve in the support tube (17), **characterized in that** the assembly body consists of a plate (60), in particular of steel which has a stronger hardness than the support tube, and features a larger diameter than an installation opening (61) provided for the plate in the support tube (17).

3. Liquid filter according to one of the above claims, **characterized in that** a valve seat (62) is integrated in the plate (60) which is sealed by a valve disk (34) when the valve is closed.

4. Liquid filter according to one of the claims 2 or 3, **characterized in that** the plate (60) has at least a partial elastomer coating.

5. Liquid filter according to one of the claims 2 - 4, **characterized in that** the valve disk (34) of the valve (32) is supported in the support tube (17) by the insertion of a compression spring (35).

6. Liquid filter according to one of the claims 2 - 5, **characterized in that** the support tube (17) features a stop for the assembly body (33) in the form of a ring-shaped flange or in the form of ribs (38).

7. Liquid filter according to one of the above claims, **characterized in that** the plate (60) is a deep-drawn sheet-metal part.

8. Method for assembling a plate (60) in a liquid filter, in particular for oil or fuel of an internal combustion engine, consisting of a housing (10) with at least one fluid inlet (22), one return duct (25) and one filter insert (14), and one support tube for the filter insert as well as a valve disposed in the support tube (17), which is in particular made fo plastic, in particular a bypass valve, the valve featuring an assembly body (33) for fixing the valve in the support tube (17), **characterized in that** the assembly body consists of a plate (60), in particular of steel which has a stronger hardness than the support tube, and features a larger diameter than an installation opening (61) provided for the plate in the support tube (17), and that the plate (60) is inserted into the installation opening (61) provided therefor in the support tube, a valve disk (34) and a compression spring (35) being fixed as functional components of the valve in the support tube, thus fixing the plate by means of a deformation of the plate (60) and the installation opening (61).

9. Method according to claim 8, **characterized in that** the plate (60) after being inserted into the installation opening (61) is deformed plastically by an appropriate tool in such a way that the diameter of the plate is enlarged.

## Revendications

1. Filtre à liquide, notamment pour l'huile ou le carburant d'un moteur à combustion interne, composé d'un boîtier (10) avec au moins une arrivée de liquide (22), un canal de retour (25) et un insert de filtre (14), une unité de soupape (67) qui est composée au moins d'un corps de montage (33) destiné au montage de l'unité de soupape dans le boîtier, d'un siège de soupape (62) et d'une tête de soupape (34) étant disposée à un emplacement de montage du boîtier, **caractérisé en ce que** le corps de montage est fait d'une plaque (60), en particulier en acier, qui fait preuve d'une plus grande dureté que le matériau de l'emplacement de montage dans le boîtier et a un diamètre supérieur à une ouverture de montage (61) définie par l'emplacement de montage.

2. Filtre à liquide, notamment pour l'huile ou le carburant d'un moteur à combustion interne, composé d'un boîtier (10) avec au moins une arrivée de liquide (22), un canal de retour (25) et un insert de filtre (14) et un tube de support pour l'insert de filtre ainsi qu'une soupape disposée dans le tube de support (17) principalement faite de matière plastique, notamment une soupape de dérivation, la soupape présentant un corps de montage (33) destiné à la fixation de la soupape dans le tube de support (17), **caractérisé en ce que** le corps de montage est fait d'une plaque (60), en particulier en acier, qui fait preuve d'une plus grande dureté que le tube de support et a un diamètre supérieur à une ouverture de montage (61) prévue pour la plaque dans le tube de support (17).

3. Filtre à liquide selon l'une des revendications précédentes, **caractérisé en ce qu'**un siège de soupape (62) étanché par une tête de soupape (34) lorsque la soupape est fermée est intégré à la plaque (60).

4. Filtre à liquide selon l'une des revendications 2 ou 3, **caractérisé en ce que** la plaque (60) est revêtue, au moins partiellement, d'un élastomère.

5. Filtre à liquide selon l'une des revendications 2 à 4, **caractérisé en ce que** la tête de soupape (34) de la soupape (32) s'appuie dans le tube de support (17) par l'insertion d'un ressort de pression (35)

6. Filtre à liquide selon l'une des revendications 2 à 5, **caractérisé en ce que** le tube de support (17) présente une butée pour le corps de montage (33) sous forme de bride annulaire ou sous forme de nervures (38).

7. Filtre à liquide selon l'une des revendications précédentes, **caractérisé en ce que** la plaque (60) est une pièce d'emboutissage profond en tôle.

8. Procédé de montage d'une plaque (60) dans un filtre à liquide, notamment pour l'huile ou le carburant d'un moteur à combustion interne, composé d'un boîtier (10) avec au moins une arrivée de liquide (22), un canal de retour (25) et un insert de filtre (14) et un tube de support pour l'insert de filtre ainsi qu'une soupape disposée dans le tube de support (17) principalement faite de matière plastique, notamment une soupape de dérivation, la soupape présentant un corps de montage (33) destiné à la fixation de la soupape dans le tube de support (17), **caractérisé en ce que** le corps de montage est fait d'une plaque (60), en particulier en acier, qui fait preuve d'une plus grande dureté que le tube de support et a un diamètre supérieur à une ouverture de montage (61) prévue pour la plaque dans le tube de support (17) et que la plaque (60) est poussée dans l'ouverture de montage (61) prévue à cet effet dans le tube de support, ayant pour conséquence qu'une tête de soupape (34) et un ressort de pression (35) sont fixés, en tant que pièces fonctionnelles de la soupape, dans le tube de support, une fixation de la plaque étant générée par une déformation de la plaque (60) et de l'ouverture de montage (61).

9. Procédé selon la revendication 8, **caractérisé en ce que**, après avoir été insérée dans l'ouverture de montage (61), la plaque (60) soit déformée plastiquement avec un outil approprié de sorte que le diamètre de la plaque augmente.
